# EUROPEAN PATENT SPECIFICATION

(11) **EP 2 880 990 B1**
(45) Date of publication and mention of the grant of the patent: **11.04.2018**
(21) Application number: 13825290.3
(22) Date of filing: 26.07.2013
(51) Int. Cl.: A23L 7/109, A23L 7/113

(54) **METHOD FOR PRODUCING COOKED NOODLE**
VERFAHREN ZUR HERSTELLUNG VON GEKOCHTEN NUDELN
PROCÉDÉ DE PRODUCTION DE NOUILLES CUITES

(30) Priority: 31.07.2012 JP 2012169148
(43) Date of publication of application: 10.06.2015
(73) Proprietor: Nisshin Foods Inc., Tokyo 101-8441 (JP)
(72) Inventor: ITO, Makoto, Tokyo 101-8441 (JP); KAJIO, Fusaki, Tatebayashi-shi Gunma 374-0052 (JP); MIYA, Youichirou, Fujimino-shi, Saitama 356-8511 (JP)
(74) Representative: Blodig, Wolfgang
(86) International application number: PCT/JP2013/070317
(87) International publication number: WO 2014/021214

(56) References cited:
- WO-A1-2007/114091
- WO-A1-2009/054100
- JP-A- H0 380 068
- JP-A- S5 675 073
- JP-A- H02 117 353
- JP-A- H06 327 427
- JP-A- H10 150 939
- JP-A- S59 175 854
- JP-A- S63 133 958
- JP-A- 2007 049 972
- JP-A- 2008 017 746
- JP-A- 2009 011 313

## Description

### [Technical Field]

The present invention relates to a method for producing a cooked noodle.

### [Background Art]

Cooked noodles obtained by refrigerating or freezing precooked noodles are preferred because of the storability for a long period of time and the convenience to eat after just slightly warmed up, and have been increasingly consumed in recent years. Such cooked noodles, however, have a high water content and therefore may be degraded in their quality during storage, leading to a problem that the texture of the noodles when eaten easily becomes too hard or otherwise a too soft. The problem of degradation in the quality will be more noticeable when the temperature has varied during the production, distribution of the cooked noodles, storage in households or the like.

Methods for preventing degradation in the quality of cooked noodles during storage have been conventionally suggested. Patent Literature 1 describes that when raw noodles are boiled in a sugar solution having a concentration of 1% or more and containing sugars, for example, saccharified starches such as starch syrup and powdered starch syrup, oligosaccharides and reduced saccharified starches or boiled noodles are cooled in the sugar solution, the thus-obtained noodles maintain a good texture after stored at 10°C for one to two days. Patent Literature 2 describes that when frozen noodles are obtained by freezing boiled noodles which has been infiltrated with starch syrup, reduced starch syrup, oligosaccharides or a mixture thereof, the thus-obtained noodles maintain their quality even after thawing. Patent Literature 3 describes that when boiled noodles are subjected to contact treatment with a spreading liquid containing maltooligosaccharide and water-soluble polysaccharides and placed in a container, the thus-obtained noodles maintain a good texture even after stored for 24 hours or more. Patent Literature 4 describes that when boiled pasta is immersed in an aqueous solution containing sugars such as oligosaccharides, trehalose, starch syrup, reduced starch syrup, dextrin, and polydextrose at 40 to 105°C for 5 to 60 minutes, the thus-obtained pasta has an excellent texture even after chilled or frozen-stored.

In conventional cooked noodles described above, however, degradation in the texture caused by storage has been prevented to some extent, but the effect has not been sufficient. Additionally, sugars which are attached to the noodles or which infiltrate into the noodles have inevitably impaired the flavor.

### [Citation List]

### [Patent Literature]

[Patent Literature 1]
   JP-B-3432032
[Patent Literature 2]
   JP-A-8-173072
[Patent Literature 3]
   JP-B-4690261
[Patent Literature 4]
   JP-B-4690825

### [Summary of Invention]

### [Technical Problem]

It is an object of the present invention to provide a cooked noodle capable of maintaining a good texture, taste and flavor even after refrigerated- or frozen-stored.

### [Solution to Problem]

As a result of making various studies to achieve the aforementioned object, the present inventors have found that allowing a liquid comprising specific amounts of a sugar and a starch to attach to a heat-cooked noodle provides a cooked noodle which has a texture comparable to a freshly boiled noodle when reheated even after refrigerated- or frozen-stored for a long period of time without impairment of the taste and flavor due to the influence of sugar.

Specifically, the present invention provides a method for producing a cooked noodle, comprising allowing a liquid comprising 1.0 to 15.0% by mass of a sugar selected from the group consisting of a monosaccharide, a disaccharide, an oligosaccharide having a degree of polymerization of from 3 to 9, and a sugar alcohol, and 0.5 to 8.0% by mass of a starch selected from the group consisting of a starch, an esterified starch, etherified, crosslinked starch, oil-and-fat processed starch and a pregelatinized starch to attach to a heat-cooked noodle.

### [Advantageous Effect of Invention]

According to the present invention, cooked noodles having a good texture like freshly boiled noodles when reheated even after refrigerated- or frozen-stored for a long period of time can be obtained. Besides, the cooked noodles of the present invention are not impaired in the taste and flavor due to the influence of sugars and maintain their original good taste and flavor.

### [Description of Embodiment]

In the method for producing cooked noodles of the present invention, a liquid comprising a sugar and a starch (hereinafter, it may be referred to as a sugar solution in the specification) is allowed to attach to a heat-cooked noodle. According to the method, the cooked noodle produced cab be prevented from degradation in the quality while refrigerated- or frozen-stored and degradation in the texture when reheated.

As long as noodles subjected to the production method of the present invention are mainly based on wheat flour, the types and production methods are not especially limited. The noodles may be produced by the routine methods such as a handmade or hand-stretched method, a compression flattening noodle-manufacturing method, a rolling noodle-manufacturing method and an extrusion noodle-manufacturing method, and examples thereof include pasta such as macaroni and spaghetti, Japanese thick noodles (*udon*), medium-thick noodles (*hiyamugi*), thin noodles (*somen*), flat-faced noodles (*hiramen*), Japanese buckwheat noodles (*soba*),es Chinese noodles and dough wrappers (such as Chinese dumpling wrappers (*gyoza*), laviolis a la vapeur (*shumai*), spring roll (*harumaki*) and Chinese wonton wrappers). These noodles may be dried noodles or raw noodles.

Examples of the means for heat-cooking the noodles described above include boiling, steaming and the like. The amount of water used, time, and temperature may be adjusted depending on the type of noodles to be used such that the desired hardness and yield are achieved. In the case of boiling, in general, a yield of 220% or more, preferably of 230 to 260%, should be achieved. Salt water or the like, in addition to ordinary water, may be used as water for boiling. Heat-cooked noodles are cooled with water by a routine method and drained before attachment of a sugar solution. The food product temperatures of noodles (temperatures measured at the center of the cooked noodle mass and other two points by a known method using a thermometer, thermography or the like.) when allowing a sugar solution to attach to the noodles are preferably 15°C or less.

A liquid comprising sugars and starches (a sugar solution) is allowed to attach to the heat-cooked noodles above described. The sugars are edible sugars having a degree of polymerization of the sugar unit from 1 to 9, and examples thereof include monosaccharides and disaccharides such as glucose, fructose, galactose, sucrose, lactose, maltose, trehalose and the like, oligosaccharides such as isomaltooligosaccharide and galactooligosaccharide (a degree of polymerization from 3 to 9), and sugar alcohols such as xylitol and sorbitol. Among these, oligosaccharides, such as isomaltooligosaccharide and galactooligosaccharide, having a degree of polymerization from 3 to 7 are preferred. Any of the sugars described above may be used singly, or two or more may be used in combination.

The content of the sugars described above in the sugar solution is 1.0 to 15.0% by mass, preferably 4.0 to 8.0% by mass. If the content of the sugars is less than 1.0% by mass, the texture of the noodles cannot be sufficiently maintained, and on the other hand, the content of more than 15.0% by mass is not preferred because the noodles may have the sugar flavor.

Examples of the starches include starches derived from plants such as wheat, potato and tapioca, and processed starch obtained by subjecting these starches to processing treatment, and processed starch is preferred. Processed starch can be produced by treating raw material starch with a chemical processing method, a physical processing method or the like. The chemical processing methods are esterification, etherification and crosslinking. Examples of the esterified starch include acetylated starch, phosphated starch, octenyl succinated starch and the like. Examples of the etherified starch include hydroxypropyl starch, carboxymethylated starch and the like. Examples of the crosslinked starch include phosphate-crosslinked starch, glycerol-crosslinked starch and the like. Starches obtained by the physical processing method are oil-and-fat processed starch and pregelatinized starch. Any of the starches described above may be used singly, or two or more may be used in combination. Among the above starches, hydroxypropyl starch is preferred.

The content of the starches described above in the sugar solution is 0.5 to 8.0% by mass, preferably 1.0 to 4.0% by mass. If the content of the starches is less than 0.5% by mass or exceeds 8.0% by mass, the texture of the noodles cannot be sufficiently maintained, or it becomes difficult to allow the sugar solution to uniformly attach to the noodles because the viscosity of the sugar solution is extremely increased.

The sugar solution of the present invention may further comprise salt. Addition of salt to the sugar solution enables better maintenance of the texture and the taste and flavor of cooked noodles. Examples of the salt include salts generally served as food, such as common salt, rock salt, and synthesized sodium chloride. The content of the salt in the sugar solution may be 15.0 to 33.0% by mass, preferably 21.0 to 28.0% by mass. If the content of the salt is less than 15.0% by mass, the effect of preventing degradation in the texture cannot be sufficiently achieved, and on the other hand, if the content of the salt exceeds 33.0% by mass, noodles become salty and the taste and flavor is degraded.

A sugar solution used in the production method of the present invention can be prepared by suspending or dissolving the sugars and starches described above, and additionally salt as required in water. Preferably, when the sugar solution is heat-treated before the sugar solution is allowed to attach to the noodles, the effect of preventing degradation in the texture of the noodles is enhanced. The sugar solution is preferably heat-treated at 40 to 105°C for 1 to 30 minutes.

The sugar solution prepared in accordance with the procedure described above is allowed to attach to noodles after heat-cooking. The amount attached may be 1.0 to 7.5 parts by mass, preferably 2.5 to 5.0 parts by mass based on 100 parts by mass of the noodles. If the amount of the sugar solution attached is less than 1.0 part by mass, the texture of the noodles cannot be sufficiently maintained, and on the other hand, if the amount attached exceeds 7.5 parts by mass, the noodles become fragile or too soft due to the moisture in the sugar solution.

Means for allowing the sugar solution to attach to the noodles is not especially limited as long as the amount of the sugar solution described above can be allowed to attach to the entire heat-cooked noodles. Examples of the means include spraying or sprinkling of the sugar solution on the noodles, or addition of the sugar solution to the noodles followed by immersion, stirring or kneading. Among these, preferred is a method for adding the sugar solution to the noodles followed by stirring.

Additionally, in the production method of the present invention, oils or fats may be further allowed to attach to the noodles to which the sugar solution has been attached. Allowing the oils or fats to attach can prevent the sugar solution from separating from the noodles. Examples of the oils or fats attached include edible oils or fats which are liquid at normal temperature, such as salad oil, cottonseed oil, corn oil, and olive oil. The amount of the oils or fats attached may be 0.5 to 5 parts by mass, preferably 0.8 to 3 parts by mass based on 100 parts by mass of the noodles. If the amount of the oils or fats attached is less than 0.5 parts by mass, the effect of preventing the sugar solution from separating from the noodles cannot be sufficiently achieved because coating by the oils or fats is insufficient. On the other hand, if the amount of the oils or fats attached is 5 parts by mass or more, the noodles become oily.

In the production method of the present invention, the noodles to which the sugar solution or further fats or oils have been attached are preferably treated under reduced pressure. The reduced pressure conditions, which may depend on the amount of noodles treated, may be 0.4 bar or less, preferably 0.1 bar or less, more preferably under vacuum for 5 to 20 minutes. It is preferred to carry out reduced pressure treatment using evaporation latent heat until the food product temperature of the noodles reaches 10°C or less, preferably about 5 to 6°C because the quality of the noodles is more enhanced. The reduced pressure processing can be carried out using known pressure reducing devices. For example, a method in which a pressure reducing pump is used in a vacuum chamber or a commercially available vacuum cooler (for example, manufactured by MIURA Co., Ltd.; CMJ-20) can be used. After the reduced pressure treatment is finished, the reduced pressure conditions are allowed to gradually return to the normal pressure, whereby providing noodles subjected to the reduced pressure treatment.

The procedure as above can provide the cooked noodles of the present invention. The cooked noodles provided can be stored under general refrigerated, chilled, or frozen conditions. For frozen-storage, noodles are preferably frozen once, and then, stored under the general frozen-storage conditions. Means for freezing the noodles may be either quick freezing or slow freezing, and quick freezing is preferred.

The cooked noodles of the present invention may be stored together with a sauce or the like. For example, after cooked noodles obtained by the production method of the present invention are placed in a container, a sauce or the like is allowed to attach to the noodles, which then may be refrigerated, chilled or frozen. Alternatively, after a sauce or the like is allowed to attach to the cooked noodles of the present invention, the noodles may be placed in a container and refrigerated, chilled or frozen. Alternatively, the cooked noodles of the present invention are frozen once, and a sauce or the like is further allowed to attach to the resultant frozen noodles, which then may be frozen again. Examples of means for allowing a sauce or the like to attach to the cooked noodles include, but are not especially limited to, immersing noodle strands or a noodle mass in a sauce or the like; coating noodle strands or a noodle mass with a sauce or the like; sprinkling or spraying a sauce or the like onto noodle strands or a noodle mass; packing noodle strands or a noodle mass in a container together with a sauce or the like; mixing and stirring noodle strands or a noodle mass with a sauce or the like; and sauteing noodle strands or a noodle mass with a sauce or the like.

As the sauce or the like described above, any sauces and the like can be used in accordance with the type of cooked noodles and preference of consumers. Examples of the sauce or the like include, but are not limited to, tomato-based sauces such as a meat sauce, a Neapolitan sauce and an arrabbiata sauce, a white sauce such as a carbonara sauce, oil-based sauces such as a peperoncino sauce and a brown sauce for pasta such as macaroni and spaghetti; soy-sauce-based sauces and soups, a Chinese soup, a curry sauce, a Worcester sauce and various seasonings for Japanese thick noodles (*udon*), medium thick noodles (*hiyamugi*), thin noodles (*somen*), Japanese buckwheat noodles (*soba*), Chinese noodles and the like. The sauce or the like may be in any form generally used for noodles, such as soups, dipping sauces, sauces and dried powder. Besides, the sauce or the like may appropriately include ingredients such as vegetables, mushrooms, meats, seafood, eggs and spices.

The cooked noodles of the present invention obtained by the aforementioned method are reheated, as occasion demands, to be eaten. Thawing at room temperature or usual heating means such as a microwave oven, boiling, steam heating or an oven may be used for reheating.

### [Examples]

The present invention is described in more details hereinbelow referring to Examples, but the present invention is not intended to be limited solely by these Examples.

### (Production Examples 1 to 7)

One hundred fifteen grams of dry spaghetti (Blue 1.7 mm; manufactured by Nisshin Foods Inc.) was weighed and boiled in 1% salt water for 9 minutes (yield 248%). The spaghetti freshly boiled was cooled by sufficiently stirring in water at 10°C for 30 seconds and then, drained and distributed onto trays. A sugar solution having the composition and the amount shown in Table 1 was sprinkled on 100 parts by mass of the boiled spaghetti. Sufficient mixing allowed the total amount of the sugar solution to attach to the entire spaghetti, to thereby provide cooked spaghetti. This cooked spaghetti was taken from the tray, put into a plastic bag and stored in a storage at 5°C for a day.

### (Test Example 1)

The bag of the cooked spaghetti of Production Examples 1 to 7 was opened, followed by heating in a 500 W microwave oven and then, serving on a plate. Appearance and texture were evaluated by 10 panelists in accordance with the evaluation criteria shown in Table 2. Additionally, after a sauce for spaghetti was poured and mixed, the appearance and texture of the spaghetti and sauce were evaluated by the same 10 panelists in accordance with the evaluation criteria shown in Table 2. The average values of the result of the evaluation are shown in Table 1.

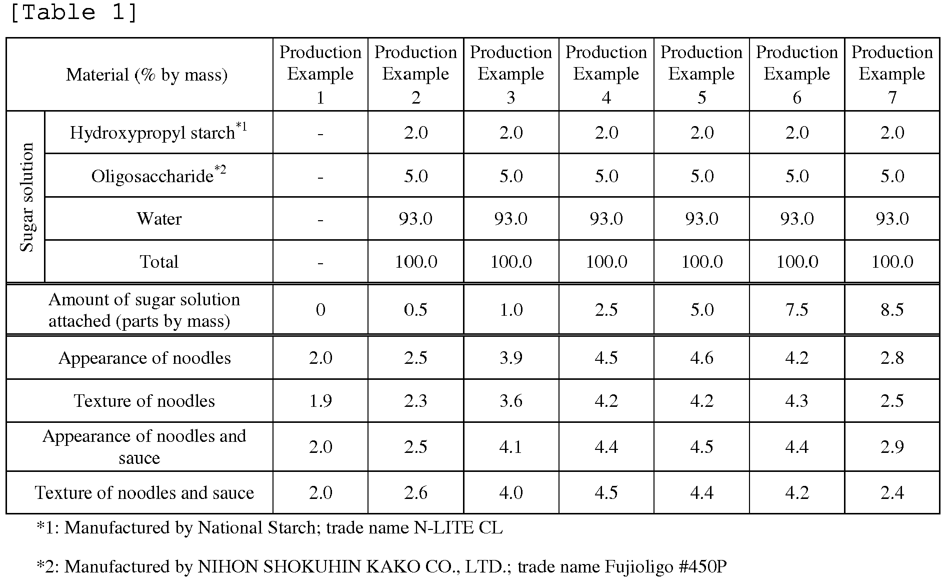

**[Table 2]**

| | | |
|---|---|---|
| Appearance of noodles | 5 | The surface of noodles has very smooth appearance. |
| | 4 | The surface of noodles has considerably smooth appearance. |
| | 3 | The surface of the noodles is relatively smooth and is free from rough feeling. |
| | 2 | The surface of the noodles is slightly coarse and rough, or the surface is slightly dissolved. |
| | 1 | The surface of the noodles is coarse and rough, or the surface is dissolved. |
| Texture of noodles | 5 | The noodles have a satisfactory texture of al dente, in which the surface is soft and elastic and a hard core remains in the center. A very good texture. |
| | 4 | The noodles have a texture of al dente, in which the surface is soft and elastic and a hard core remains in the center. A good texture. |
| | 3 | The surface is relatively soft and elastic. A core remains, of which hardness is slightly weak. |
| | 2 | The noodles have no core in the center and are slightly too soft or slightly too hard, having a unsatisfactory spaghetti like texture. |
| | 1 | The noodles have no core in the center and are too soft or too hard, lacking a spaghetti like texture. |
| Appearance of noodles and sauce | 5 | The sauce clings to noodles evenly and has very good appearance. |
| | 4 | The sauce clings to noodles well. |
| | 3 | The sauce clings to noodles ordinarily. |
| | 2 | The sauce clings to noodles poorly or unevenly. |
| | 1 | The sauce clings to noodles considerably poorly and unevenly. |
| Texture of noodles and sauce | 5 | The noodles are sufficiently elastic and harmonize well with sauce, providing a very good texture. |
| | 4 | The noodles are elastic and provide a good texture together with the sauce. |
| | 3 | The noodles are relatively elastic and provide an ordinary texture. |
| | 2 | The noodles are slightly too soft or slightly too hard. The noodles have slightly absorbed the sauce, providing a slightly poor texture. |
| | 1 | The noodles are too soft or too hard. The noodles have absorbed the sauce much, providing a poor texture. |

### (Production Examples 8 to 23)

Cooked spaghetti of Production Examples 8 to 23 was produced and refrigerated as in Production Example 4 except that the amount of the sugars or starches in each sugar solution was changed as shown in Table 3.

### (Test Example 2)

The cooked spaghetti of Production Examples 8 to 23 was evaluated in the same manner as in Test Example 1. The result of the evaluation is shown in Table 3. It is noted that the results of Production Example 4 are also shown in Table 3.

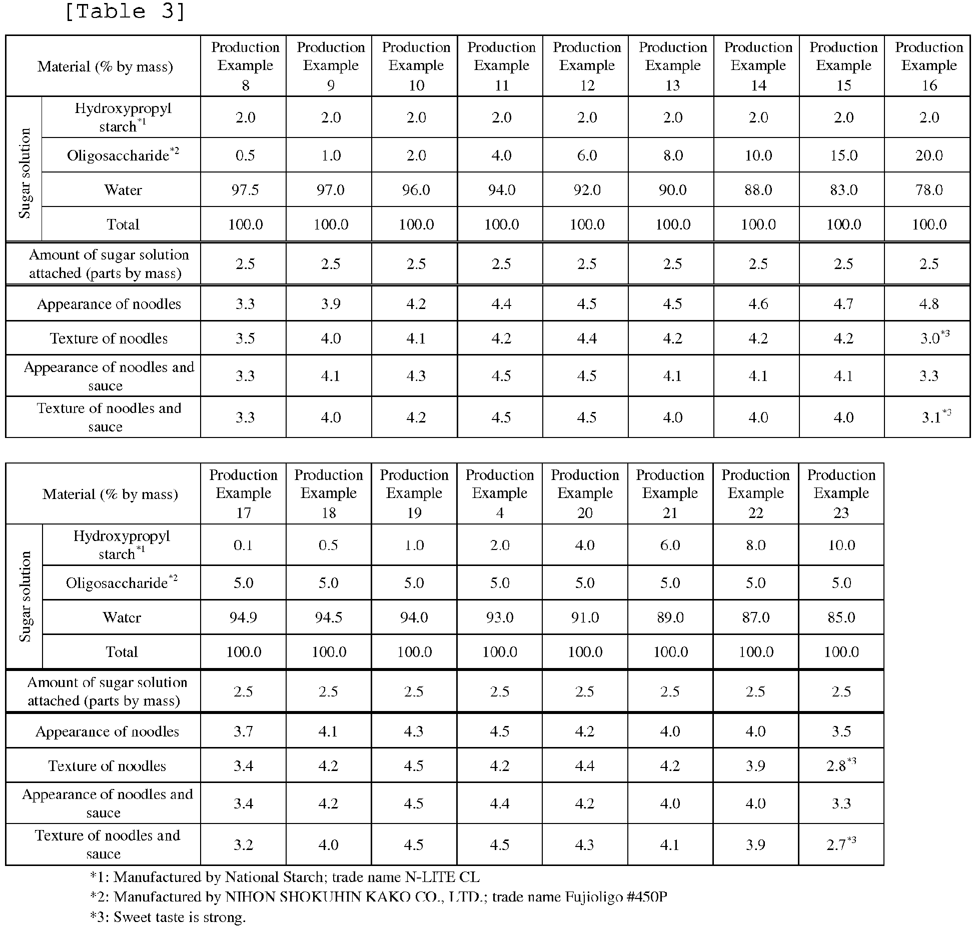

### (Production Examples 24 to 28)

One hundred fifteen grams of dry spaghetti (Blue 1.7 mm; manufactured by Nisshin Foods Inc.) was weighed and boiled in 1% salt water for 9 minutes (yield 248%). The spaghetti freshly boiled was cooled by sufficiently stirring in water at 10°C for 30 seconds and then, drained and distributed onto trays. A sugar solution having the composition and the amount shown in Table 4 was sprinkled on 100 parts by mass of the boiled spaghetti. Sufficient mixing allowed the total amount of the sugar solution to attach to the entire spaghetti. Subsequently, the spaghetti to which the sugar solution had been attached was placed together with the tray in the chamber of a vacuum cooler (manufactured by MIURA Co., Ltd.; CMJ-20) and subjected to reduced pressure treatment under reduced pressure conditions shown in Table 4 with 5 minutes of slow cooling time until the food product temperature reached 10°C or less (for about 7 minutes including the slow cooling time). The reduced pressure was released to return to the normal pressure, and thus cooked spaghetti was obtained. The cooked spaghetti was taken from the tray, put into a plastic bag and stored in a storage at 5°C for three days.

### (Test Example 3)

The cooked spaghetti of Production Examples 24 to 28 was evaluated in the same manner as in Test Example 1. The result of the evaluation is shown in Table 4.

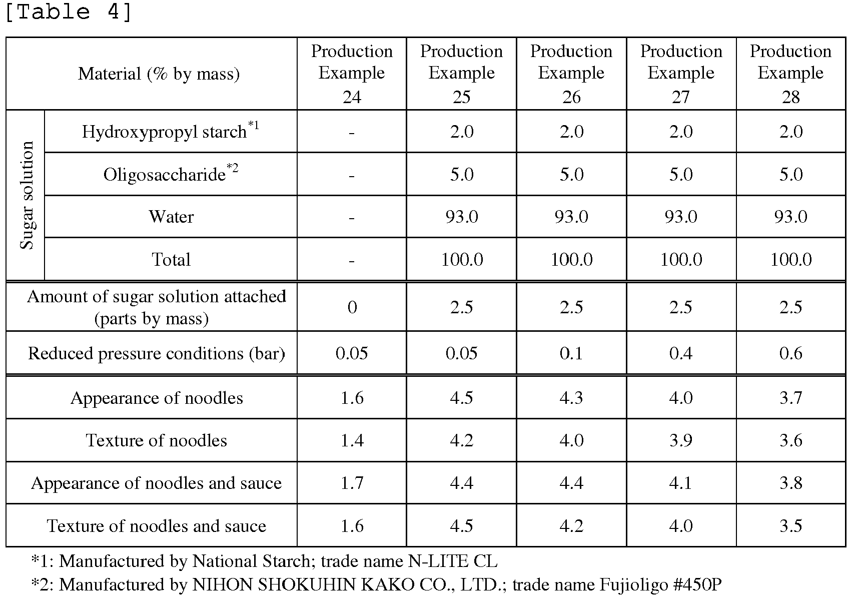

### (Production Examples 29 to 30)

Cooked spaghetti of Production Examples 29 to 30 was produced and refrigerated in the same manner as in Production Example 4 except that the sugars in each sugar solution were replaced with those shown in Table 5.

### (Production Example 31)

Cooked spaghetti of Production Example 31 was produced and refrigerated in the same manner as in Production Example 4 except that the sugar solution heated with stirring at 90°C for 5 minutes was used.

### (Production Example 32)

Cooked spaghetti of Production Example 32 was produced and refrigerated in the same manner as in Production Example 4 except that the sugar solution containing salt in the amount shown in Table 5 was used.

### (Production Example 33)

Cooked spaghetti to which the sugar solution had been attached was obtained in the same manner as in Production Example 4. Olive oil in the amount based on 100 parts by mass of the boiled spaghetti shown in Table 5 was further sprinkled on the spaghetti to which the sugar solution had been attached, and mixed to allow the total amount to attach. The cooked spaghetti of Production Example 33 thus produced was refrigerated.

### (Test Example 4)

The cooked spaghetti of Production Examples 29 to 33 was evaluated in the same manner as in Test Example 1. The result of the evaluation is shown in Table 5. It is noted that the results of Production Example 4 are also shown in Table 5.

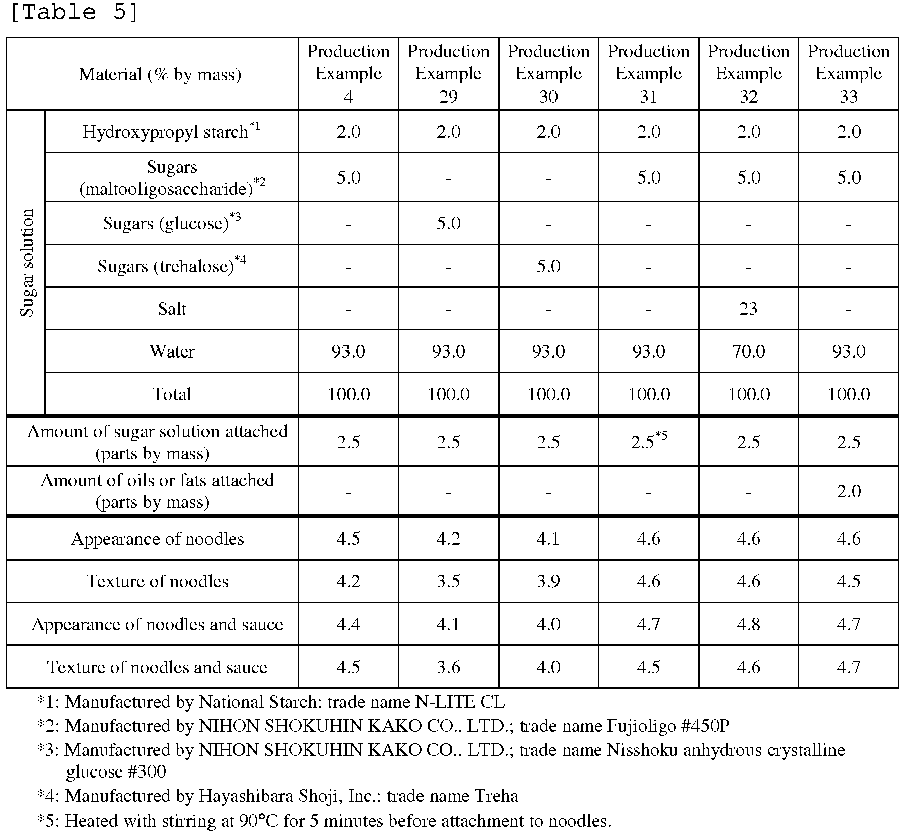

## Claims

1. A method for producing a cooked noodle, comprising allowing a liquid comprising 1.0 to 15.0% by mass of a sugar selected from the group consisting of a monosaccharide, a disaccharide, an oligosaccharide having a degree of polymerization of from 3 to 9, and a sugar alcohol, and 0.5 to 8.0% by mass of a starch selected from the group consisting of a starch, an esterified starch, etherified starch, crosslinked starch, oil-and-fat processed starch and a pregelatinized starch to attach to a heat-cooked noodle.

2. The method according to claim 1, wherein the amount of the liquid attached to the heat-cooked noodle is 1.0 to 7.5 parts by mass based on 100 parts by mass of the noodle.

3. The method according to claim 1 or 2, wherein the noodle to which the liquid has been attached is subjected to reduced pressure treatment.

4. The method according to any one of claims 1 to 3, wherein the liquid further comprises salt.

5. The method according to any one of claims 1 to 4, wherein an oil or fat is further allowed to attach to the noodle to which the liquid has been attached.

6. The method according to any one of claims 1 to 5, wherein the liquid is heat-treated before allowed to attach to the heat-cooked noodle.

7. The method according to any one of claims 1 to 6, wherein the sugar is oligosaccharide.

8. The method according to any one of claims 1 to 7, wherein the starch is hydroxypropyl starch.

9. The method according to any one of claims 3 to 8, wherein a condition for the reduced pressure treatment is 0.4 bar or less and 5 to 20 minutes.

10. The method according to any one of claims 6 to 9, wherein a condition for the heat treatment are 40 to 105°C and 1 to 30 minutes.

## Patentansprüche

1. Verfahren zur Herstellung einer gekochten Nudel, umfassend das Ermöglichen, dass sich eine Flüssigkeit, die 1,0 bis 15,0 Massenprozent eines Zuckers umfasst, ausgewählt aus der Gruppe bestehend aus einem Monosaccharid, einem Disaccharid, einem Oligosaccharid, das einen Polymerisationsgrad von 3 bis 9 aufweist, und einem Zuckeralkohol und 0,5 bis 8,0 Massenprozent einer Stärke ausgewählt aus der Gruppe bestehend aus einer Stärke, einer veresterten Stärke, einer veretherten Stärke, einer vernetzten Stärke, einer Öl- und Fett-verarbeiteten Stärke und einer gelatinierten Stärke, mit einer durch Wärme gegarten Nudel verbindet.

2. Verfahren nach Anspruch 1, wobei die Menge der Flüssigkeit, die sich mit der durch Wärme gegarten Nudel verbindet, 1,0 bis 7,5 Massenanteile, basierend auf 100 Massenanteilen der Nudel, beträgt.

3. Verfahren nach Anspruch 1 oder 2, wobei die Nudel, mit der sich die Flüssigkeit verbunden hat, einer Behandlung unter vermindertem Druck unterzogen wird.

4. Verfahren nach einem der Ansprüche 1 bis 3, wobei die Flüssigkeit ferner Salz umfasst.

5. Verfahren nach einem der Ansprüche 1 bis 4, wobei ermöglicht wird, dass sich ferner ein Öl oder ein Fett mit der Nudel verbindet, mit der sich die Flüssigkeit verbunden hat.

6. Verfahren nach einem der Ansprüche 1 bis 5, wobei die Flüssigkeit wärmebehandelt wird, bevor ermöglicht wird, dass sie sich mit der durch Wärme gegarten Nudel verbindet.

7. Verfahren nach einem der Ansprüche 1 bis 6, wobei der Zucker ein Oligosaccharid ist.

8. Verfahren nach einem der Ansprüche 1 bis 7, wobei die Stärke Hydroxypropylstärke ist.

9. Verfahren nach einem der Ansprüche 3 bis 8, wobei die Bedingung für die Behandlung unter vermindertem Druck 0,4 bar oder weniger und 5 bis 20 Minuten ist.

10. Verfahren nach einem der Ansprüche 6 bis 9, wobei die Bedingung für die Wärmebehandlung 40 bis 105°C und 1 bis 30 Minuten ist.

## Revendications

1. Procédé de production de nouilles cuites, comprenant l'application d'un liquide comprenant de 1,0 à 15,0 % en masse d'un sucre choisi dans le groupe constitué d'un monosaccharide, d'un disaccharide, d'un oligosaccharide présentant un degré de polymérisation de 3 à 9, et d'un alcool glucidique, et de 0,5 à 8,0 % en masse d'un amidon choisi dans le groupe constitué d'un amidon, d'un amidon estérifié, d'un amidon éthérifié, d'un amidon réticulé, d'un amidon traité à l'huile et à la graisse et d'un amidon prégélatinisé sur des nouilles cuites à chaud.

2. Procédé selon la revendication 1, dans lequel la quantité du liquide appliqué sur les nouilles cuites à chaud est de 1,0 à 7,5 parties en masse sur la base de 100 parties en masse des nouilles.

3. Procédé selon la revendication 1 ou 2, dans lequel les nouilles sur lesquelles le liquide a été appliqué sont soumises à un traitement sous pression réduite.

4. Procédé selon l'une quelconque des revendications 1 à 3, dans lequel le liquide comprend en outre du sel.

5. Procédé selon l'une quelconque des revendications 1 à 4, dans lequel une huile ou une graisse est en outre appliquée sur les nouilles sur lesquelles le liquide a été appliqué.

6. Procédé selon l'une quelconque des revendications 1 à 5, dans lequel le liquide est traité à la chaleur avant d'être appliqué sur les nouilles cuites à chaud.

7. Procédé selon l'une quelconque des revendications 1 à 6, dans lequel le sucre est un oligosaccharide.

8. Procédé selon l'une quelconque des revendications 1 à 7, dans lequel l'amidon est un amidon hydroxypropylé.

9. Procédé selon l'une quelconque des revendications 3 à 8, dans lequel des conditions pour le traitement sous pression réduite sont de 0,4 bar ou moins et de 5 à 20 minutes.

10. Procédé selon l'une quelconque des revendications 6 à 9, dans lequel des conditions pour le traitement à la chaleur sont 40 à 105 °C et 1 à 30 minutes.
